(19)

Europäisches
Patentamt
European
Patent Office
Office européen
des brevets

(11) **EP 3 917 019 A1**

(12) **EUROPEAN PATENT APPLICATION**

(43) Date of publication:
01.12.2021 Bulletin 2021/48

(51) Int Cl.:
H04B 1/28 (2006.01)          H01Q 3/01 (2006.01)
H04B 1/403 (2015.01)          H04W 88/06 (2009.01)

(21) Application number: 21175331.4

(22) Date of filing: 21.05.2021

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.05.2020 FI 20205561

(71) Applicant: Nokia Technologies Oy
02610 Espoo (FI)

(72) Inventors:
• ZAKRZEWSKA, Anna
Dublin (IE)
• BULJA, Senad
Dublin (IE)
• RULIKOWSKI, Pawel
Dublin (IE)

(74) Representative: Nokia EPO representatives
Nokia Technologies Oy
Karakaari 7
02610 Espoo (FI)

(54) **SELF-CONFIGURING RADIO FREQUENCY SYSTEMS**

(57) This specification describes an apparatus, comprising, in some example embodiments, a means for receiving, by a radiofrequency system configured with a default set of one or more configuration settings associated with a hardware component of said system, one or more environmental parameters. The apparatus may also comprise a means for determining, using measured values for the received one or more environmental parameters, that one or more predetermined operational requirements associated with the hardware component of the radiofrequency system is or are not being met, and, responsive to said determination, there may be a means for -: determining a modified set of the one or more configuration settings, and reconfiguring the default set of one or more configuration settings using the determined modified set.

EP 3 917 019 A1

**Description**

**Field**

Example embodiments relate to self-configuring radio frequency systems, such as, but not limited to, systems including one or more re-configurable hardware components such as an antenna.

**Background**

Radio frequency (RF) systems such as, but not limited to, wireless access points, base stations and satellite transceivers, may be manufactured and configured by the manufacturer or supplier to suit the broad range of user environments in which the RF system will be used. The manufacturer configuration may be termed a default configuration. Depending on different users' situations, the default configuration may be sub-optimal. In some cases, software parameters may be manually modified, but this requires degree of user knowledge and skill and may need to be repeatedly performed over time.

**Summary**

The scope of protection sought for various embodiments of the invention is set out by the independent claims. The embodiments and features, if any, described in this specification that do not fall under the scope of the independent claims are to be interpreted as examples useful for understanding various embodiments of the invention.
According to a first aspect, this specification describes an apparatus, comprising means for: receiving, by a radiofrequency system configured with a default set of one or more configuration settings associated with a hardware component of said system, one or more environmental parameters; determining, using measured values for the received one or more environmental parameters, that one or more predetermined operational requirements associated with the hardware component of the radiofrequency system is or are not being met; responsive to said determination, autonomously: determining a modified set of the one or more configuration settings; and reconfiguring the default set of one or more configuration settings using the determined modified set.
The one or more predetermined operational requirements may be pre-loaded on the radiofrequency system.
The one or more predetermined requirements may represent radiofrequency performance requirements.
The one or more predetermined radiofrequency performance requirements may define an overall target of the radiofrequency system.
The overall target of the radiofrequency system may define a minimum data throughput.
The one or more predetermined performance requirements may include a minimum value, a maximum value or range of acceptable values for particular received environmental parameters, comprising one or more of impedance, Voltage Standing Wave Ratio (VSWR), directionality, e.g. direction and/or angle of arrival, path loss, bandwidth, beam width, centre frequency, input power, signal gain, channel state information (CSI), interference levels and interference sources.
The one or more environmental parameters may comprise one or more of impedance, Voltage Standing Wave Ratio (VSWR), directionality, e.g. direction and/or angle of arrival, path loss, bandwidth, beam width, centre frequency, input power, signal gain, channel state information (CSI), interference levels and interference sources.
The means for autonomously determining the modified set of one or more configuration settings may be configured to: access a library comprising a plurality of different sets of reference configuration settings and associated operational performances; and determine a reference set of configuration settings that will move the operational performance at least towards the one or more predetermined operational requirements that is or are not being met.
The library comprising the plurality of sets of reference configurations settings may be pre-loaded on the radiofrequency system.
The one or more environmental parameters may collectively define an environment scenario associated with the hardware component, and wherein the means for autonomously determining the modified set of one or more configuration settings may be configured to: access a library comprising a plurality of sets of reference environment scenarios mapped to respective configuration settings for modifying the operational performance of the hardware component in a particular way; and determine the reference set of the environment scenarios that most closely matches the environment scenario associated with the hardware component and modifies the operational performance at least towards the one or more predetermined operational requirements that is or are not being met.
The library comprising the plurality of sets of reference configurations settings may be pre-loaded on the radiofrequency system.
The apparatus may further comprise means for fine-tuning one or more of the determined configuration settings to meet or exceed the one or more predetermined operational requirements. The means for fine-tuning the one or more selected configuration settings may be configured to use a genetic and/or machine learning algorithm.

The apparatus may further comprise means for storing the fine-tuned configuration settings in a database, in association with the one or more environmental parameters associated with the hardware component, for subsequent use.

The database may be on-board the radiofrequency system.

The default configuration settings may be associated with the physical structure of the hardware component and wherein autonomously reconfiguring the default set of one or more configuration settings may comprise modifying the physical structure of the hardware component.

The hardware component may be an antenna. The antenna may comprise a surface having a plurality of radiating elements, wherein the default configuration settings define a first pattern of enabled radiating elements and the modified configuration settings define a second, different, pattern of enabled radiating elements.

According to a second aspect, this specification describes a method, comprising: receiving, by a radiofrequency system configured with a default set of one or more configuration settings associated with a hardware component of said system, one or more environmental parameters; determining, using measured values for the received one or more environmental parameters, that one or more predetermined operational requirements associated with the hardware component of the radiofrequency system is or are not being met; responsive to said determination, autonomously: determining a modified set of the one or more configuration settings; and reconfiguring the default set of one or more configuration settings using the determined modified set.

The one or more predetermined operational requirements may be pre-loaded on the radiofrequency system. The one or more predetermined requirements may represent radiofrequency performance requirements. The one or more predetermined radiofrequency performance requirements may define an overall target of the radiofrequency system. The overall target of the radiofrequency system may define a minimum data throughput.

The one or more predetermined performance requirements may include a minimum value, a maximum value or range of acceptable values for particular received environmental parameters, comprising one or more of impedance, Voltage Standing Wave Ratio (VSWR), directionality, e.g. direction and/or angle of arrival, path loss, bandwidth, beam width, centre frequency, input power, signal gain, channel state information (CSI), interference levels and interference sources.

The one or more environmental parameters may comprise one or more of impedance, Voltage Standing Wave Ratio (VSWR), directionality, e.g. direction and/or angle of arrival, path loss, bandwidth, beam width, centre frequency, input power, signal gain, channel state information (CSI), interference levels and interference sources.

Autonomously determining the modified set of one or more configuration settings may comprise: accessing a library comprising a plurality of different sets of reference configuration settings and associated operational performances; and determining a reference set of configuration settings that will move the operational performance at least towards the one or more predetermined operational requirements that is or are not being met.

The library comprising the plurality of sets of reference configurations settings may be pre-loaded on the radiofrequency system.

The one or more environmental parameters may collectively define an environment scenario associated with the hardware component, and wherein autonomously determining the modified set of one or more configuration settings may comprise: accessing a library comprising a plurality of sets of reference environment scenarios mapped to respective configuration settings for modifying the operational performance of the hardware component in a particular way; and determining the reference set of the environment scenarios that most closely matches the environment scenario associated with the hardware component and modifies the operational performance at least towards the one or more predetermined operational requirements that is or are not being met.

The library comprising the plurality of sets of reference configurations settings may be pre-loaded on the radiofrequency system.

The method may further comprise fine-tuning one or more of the determined configuration settings to meet or exceed the one or more predetermined operational requirements. The fine-tuning may use a genetic and/or machine learning algorithm.

The may further comprise storing the fine-tuned configuration settings in a database, in association with the one or more environmental parameters associated with the hardware component, for subsequent use. The database may be on-board the radiofrequency system.

The default configuration settings may be associated with the physical structure of the hardware component and wherein autonomously reconfiguring the default set of one or more configuration settings may comprise modifying the physical structure of the hardware component.

The hardware component may be an antenna. The antenna may comprise a surface having a plurality of radiating elements, wherein the default configuration settings define a first pattern of enabled radiating elements and the modified configuration settings define a second, different, pattern of enabled radiating elements.

According to a third aspect, this specification describes computer-readable instructions, which, when executed by a computing apparatus, causes the computer apparatus to perform any method as described with reference to the second aspect.

According to a fourth aspect, this specification describes a computer program comprising instructions for causing an apparatus to perform an method as described with reference to the second aspect.

According to a fifth aspect, this specification describes a computer-readable medium (such as a non-transitory computer-readable medium) comprising program instructions stored thereon for performing the method of: receiving, by a radiofrequency system configured with a default set of one or more configuration settings associated with a hardware component of said system, one or more environmental parameters; determining, using measured values for the received one or more environmental parameters, that one or more predetermined operational requirements associated with the hardware component of the radiofrequency system is or are not being met; responsive to said determination, autonomously: determining a modified set of the one or more configuration settings; and reconfiguring the default set of one or more configuration settings using the determined modified set.

According to a sixth aspect, this specification describes an apparatus comprising: at least one processor; and at least one memory including computer program code which, when executed by the at least one processor, causes the apparatus to: receive, by a radiofrequency system configured with a default set of one or more configuration settings associated with a hardware component of said system, one or more environmental parameters; determine, using measured values for the received one or more environmental parameters, that one or more predetermined operational requirements associated with the hardware component of the radiofrequency system is or are not being met; responsive to said determination, autonomously: determine a modified set of the one or more configuration settings; and reconfigure the default set of one or more configuration settings using the determined modified set.

## Drawings

Example embodiments will be described in more detail below with reference to the accompanying drawings, in which:

FIG. 1 is a schematic view of an apparatus or system, particularly a radiofrequency apparatus including a controller, according to some example embodiments;
FIG. 2 is a schematic view of the FIG. 1 apparatus in greater detail, according to some example embodiments;
FIG. 3 is a flow diagram showing processing operations, according to some example embodiments;
FIGs. 4A and 4B are, respectively, flow diagrams showing different sets of processing operations, which may comprise one of the FIG. 3 processing operations, according to some example embodiments;
FIG. 5 is a schematic view of a radiofrequency surface, which may provide an antenna or other component, according to some example embodiments;
FIG. 6 is a schematic view of the FIG. 5 radiofrequency surface, subsequent to a modification, according to some example embodiments;
FIGs. 7 - 11 are, respectively, perspective views of a morphable radiofrequency component in different stages of modification, according to some example embodiments;
FIG. 12 is a schematic diagram of hardware components of a system, according to an example embodiments;
FIG. 13 is a plan view of a non-transitory storage device, which may store computer-readable code according to some example embodiments;
FIG. 14 is a schematic view of an antenna array, useful for understanding of the FIG. 5 and FIG. 6 example embodiments;
FIG. 15 is a schematic view of a power divider, usable in the FIG. 14 antenna array;
FIG. 16 is a cross-sectional side view of an apparatus that may comprise at least part of a morphable radiofrequency component, referred to in relation to FIGs. 7 - 11;
FIG. 17 is a cross-sectional side view of an alternative apparatus, similar to that of FIG. 16;
FIG. 18 is a perspective view of an apparatus that may also provide at least part of a morphable radiofrequency component, referred to in relation to FIGs. 7 - 11; and
FIG. 19 is a perspective view of an apparatus that may also provide at least part of a morphable radiofrequency component, referred to in relation to FIGs. 7 - 11;

## Detailed Description

Example embodiments described herein relate to a self-configuring radiofrequency (RF) system, hereafter referred to as an RF system, which may be of any suitable type or description, wherein the RF system may comprise one or more hardware components such as, but not limited to, an RF antenna.

To give context, a self-configuring RF system may be considered one that can change configuration settings without the need for external assistance, whether manually by an engineer or by communication with a remote external device, e.g. over a network. The term "autonomously" may be used herein to describe this self-configuring aspect, in that the RF system is provided with the information it needs at the point of provision to end-users in order to adapt its operation to meet one or more operational requirements for current and future environmental conditions. For example, an RF system may be, but not limited to, a wireless access point, a cellular base station, a satellite transceiver, a mobile telephone, to give some examples. At the point of manufacture or sale, default configuration settings may be pre-loaded onto the RF system, which may be software settings, firmware settings and/or settings relating to the physical structure of one or more physical components, e.g. the pattern of radiating/receiving elements on an antenna. The default configuration settings may be set to achieve some basic performance in use, for example to receive signals for characterizing the environment that the RF system is experiencing at a given time. The default settings may also be set to achieve a specific performance, e.g. a certain data throughput performance based on generalized environment situations. However, the default settings may not take into account individual environment situations that the end user will experience, depending on how and where the RF system is to be used. In some cases, the achieved performance may be sub-optimal, possibly to the point where adjustments need to be made to meet operational requirements.

Example embodiments, by providing a self-configuring methodology and architecture, may overcome said issues without the need for manual or external input and which may adapt to particular environments over time. The methodology and architecture may be termed self-configuring for reasons that will become clear.

Example embodiments may, for example, may provide means for receiving, by an RF system configured with a default set of one or more configuration settings, one or more environmental parameters.

The default set of one or more configuration settings may refer to an initial set of configuration settings that are predefined by the manufacturer/supplier to suit a generic customer purpose. A broader definition for the default set may cover an initial or current set of one or more configuration settings, not necessarily those provided by a manufacturer, as the methodology and architecture may be a closed-loop system that self-configures repeatedly over time. As already mentioned, the one or more configuration settings may refer to the physical structure of a hardware component, e.g. an antenna of the RF system. For example, the antenna may comprise one or more surfaces, one or more of which has a plurality of radiating elements providing an array, wherein the default configuration settings define a first pattern of enabled elements and the modified configuration settings define a second, different, pattern of enabled elements. The antenna array may be reconfigured by enabling one or more elements and/or disabling one or more elements to define a different structure, for example, than the pre-configured one. The resulting radiation or receiving pattern or beam may therefore be changed, as may operational characteristics, such as direction and/or angle of arrival (DoA, AoA).

Such hardware components that can change their physical structure may be referred to generally as "morphable" components. In some embodiments, a morphable component can self-design according to methods described herein. It will be appreciated that different configuration settings may result in different performance characteristics.

Environmental parameters may comprise one or more parameters which can be received and/or measured by the RF system. They may be used to characterise the environment the RF system is currently located in or experiencing. The one or more environmental parameters may, for example, comprise one or more of impedance, Voltage Standing Wave Ratio (VSWR), directionality, e.g. direction and/or angle of arrival, path loss, bandwidth, beam width, centre frequency, input power, signal gain, channel state information (CSI), interference levels and interference sources. The parameters may comprise parameters tracing the aging of the silicon chip.

Using the measured values (a term that may include statuses) for the received one or more environmental parameters, it may be determined that one or more predetermined operational requirements associated with the hardware component is or are not being met. In some embodiments, the one or more predetermined operational requirements may be pre-loaded on the radiofrequency system, for example by the manufacturer or supplier.

The one or more predetermined operational requirements may represent RF performance requirements. For example, the one or more RF performance requirements may at least define an overall target of the RF system. For example, the overall target may define a minimum data throughput, e.g. in Mbits/sec or a time-based average thereof. For example, the overall target may define, additionally or alternatively, minimum latency, a minimum reliability parameter or other high level target. Such high level targets may be refined even further, for example to define a minimum data throughput in a particular direction, from which can be inferred how many antenna elements may be required for such performance and where their radiation pattern should be directed. The RF performance requirement or requirements may even change over time.

Alternatively, or additionally, the one or more predetermined performance requirements may include a minimum value, a maximum value or range of acceptable values for particular received environmental parameters. Examples may include one or more of impedance, Voltage Standing Wave Ratio (VSWR), directionality, e.g. direction and/or angle of arrival, path loss, bandwidth, beam width, centre frequency, input power, signal gain, channel state information (CSI), interference levels and interference sources. Any number or combination of parameters and respective target values may be defined. For example, the one or more performance requirements may specify an average data throughput of 20 Mbits/sec. For example, the one or more performance requirements may additionally specify a centre frequency of 2.4 GHz. The environmental parameters received, when the RF system is placed in a particular location may indicate that one or both performance requirements are not being met, e.g. only 14 Mbits/sec average throughput is being achieved. This may be due to a number of factors, e.g. interference due to terrain or other RF devices in proximity.

The means maybe responsive to said determination autonomously to determine a modified set of the one or more configuration settings and reconfigure the default set of one or more configuration settings using the determined modified set.

Determining the modified set may comprising accessing a library comprising a plurality of different sets of reference configuration settings and associated operational performances, whereby a reference set of configuration settings is identified that will move the operational performance at least towards the one or more predetermined operational requirements that is or are not being met. The library comprising the plurality of sets of reference configuration settings may be pre-loaded on the radiofrequency system.

Alternatively, or additionally, the one or more environmental parameters may collectively define an environment scenario associated with the hardware component, e.g. environment type W. The means for autonomously determining the modified set of one or more configuration settings may be configured to access a library comprising a plurality of sets of reference environment scenarios mapped to respective configuration settings for modifying the operational performance of the hardware component in a particular way. This may involve determining the reference set of the environment scenarios that most closely matches the environment scenario associated with the hardware component and modifies the operational performance at least towards the one or more predetermined operational requirements that is or are not being met. For example, there may be provided reference environment scenarios X, Y and Z having associated configuration settings for optimising the data throughput performance given those respective scenarios. If the measured environment scenario W is closest (e.g. in terms of a parameterized distance or minimal cost function) to reference environment scenario Y, then the configuration settings for Y may be used. The library, comprising the plurality of sets of reference configurations settings, may be pre-loaded on the radiofrequency system.

Artificial intelligence and/or machine learning algorithms may also be used to determine the modified set of one or more configuration settings.

The means may also be configured continuously or periodically to repeat the aforementioned operations to iteratively re-configure, e.g. every hour, every 6 hours, every 24 hours or every week, the RF system to maintain performance.

The means may also fine-tune the determined configuration set to achieve a tailored and more optimal configuration set for the measured environment scenario. The fine-tuned version may be stored for later use should the same environment scenario arise. Fine-tuning may involve one or more of optimization, artificial intelligence (AI), machine learning (ML) and genetic algorithms. The storing may be performed locally and/or may be uploaded to a centralised system or server which may be used to update the libraries of other devices, e.g. prior to sale or supply, or periodically during updates.

Example embodiments offer improvements beyond that of, for example, self-optimizing networks, whereby a component in the network can be 'tuned' within a range available to the component. Example embodiments involve the component changing itself on the fly, for example in terms of its physical structure.

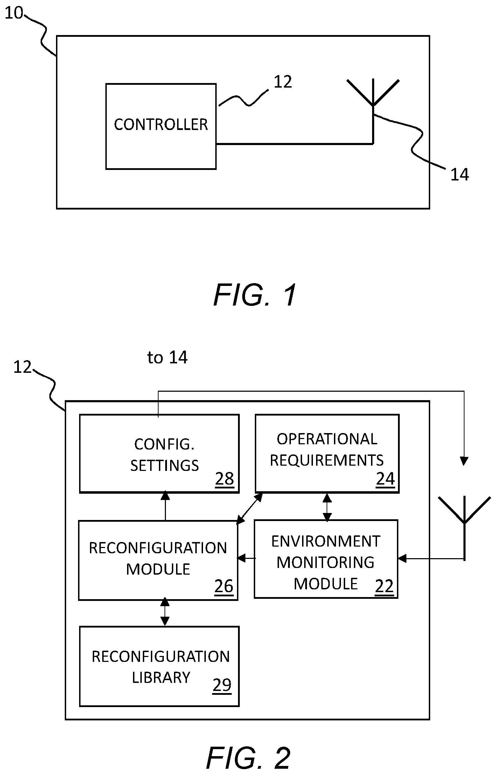

Referring to FIG. 1, an example RF system 10 is shown comprising a controller 12 and an associated hardware component 14, namely a RF antenna. The controller 12 may be embodied in hardware, software, firmware or a combination thereof. For example, the controller 12 may comprise one or more processors and/or controllers configured to operate using computer-readable code which, when executed by the one or more processors and/or controllers is configured to perform operations according to example embodiments to be described herein. In some embodiments, the controller 12 maybe part of the RF antenna 14 e.g. an integral part of its physical structure. Other components not shown in FIG. 1 may include an RF receiver or transceiver.

Referring to FIG. 2, the controller 12 may comprise various components, which may comprise an environment monitoring module 22, an operational requirements module 24, a reconfiguration module 26, a configuration settings module 28 and, optionally, a reconfiguration library 29.

The configuration settings module 28 may comprise default / current configuration settings for the RF antenna 14. The environment monitoring module 22 may be configured to receive RF signals for characterizing the current environment. The environment monitoring module 22 may be configured to receive, based on the default configuration settings, RF signals for characterizing the current environment. For example, the environment monitoring module 22 may be configured to receive signals representing, or from which can be derived, values or statuses of one or more of: impedance, Voltage Standing Wave Ratio (VSWR), directionality, e.g. direction and/or angle of arrival, path loss, bandwidth, beam width, centre frequency, input power, signal gain, channel state information (CSI), interference levels and interference sources. Other sensory inputs receivable by the RF system may be used. In some embodiments, the RF system 10 may interface with other systems (not shown) to enhance confidence in such measurements, e.g. by receiving corresponding data from nearby systems over WiFi, Bluetooth or other data transfer methods.

The operational requirements module 24 may be configured to store, in data representation, operational requirements of the RF system 10, in this case associated with performance of the RF antenna 14. The operational requirements may be pre-loaded by the manufacturer or supplier. For example, a particular value of data throughput, or an average value thereof over time, may be specified. The requirements may be more specific, for example, a target, a minimum, a maximum or range of acceptable values for particular parameters, such as one or more of impedance, Voltage Standing Wave Ratio (VSWR), directionality, e.g. direction and/or angle of arrival, path loss, bandwidth, beam width, centre frequency, input power, signal gain, channel state information (CSI), interference levels and interference sources. Size limitations may also be a requirement, particularly in the case of morphable hardware components whose physical structure may change. The operational requirements module 24 may be configured to determine performance requirements of the RF system 10.

The reconfiguration module 26 may be configured to determine, using data from the environment monitoring module 22 and the operational requirements module 24 that reconfiguration is required and what the reconfiguration should be. For example, the reconfiguration module 26 may receive from the operational requirements module 24 a data representation of said requirements and may determine that they are not being met based on the current environmental parameters. This being the case, the reconfiguration module 26 may then autonomously determine a modified set of configuration settings.

One way in which this may be performed is to iteratively change individual settings, or different combinations of settings, until the requirements are met. Another way in which this may be performed is to access the reconfiguration library 29.

The reconfiguration library 29 may be a database, a memory partition or data container, configured to store a finite number of sets representing different configuration settings associated with a resulting operational performance. For example, a first set may result in a particular direction of arrival (DoA) and beam width, whereas a second set may result in the same DoA, a greater beam width but more interference. Depending on which operational requirement is or are not being met, e.g. one related to beam width, or data throughput which is known to be improved by greater beam width, then the first set may be identified as most suitable. Alternatively, if current interference is not an issue, then the second set may be identified as most suitable given that some interference is tolerable and the greater beam width offers even greater data throughput.

Alternatively, or additionally, the reconfiguration library 29 may be configured to store the above-mentioned mappings of reference environment scenarios to configuration settings to move operation performance in a particular way, e.g. increase data throughput and/or decrease interference.

Having determined which configuration settings to modify, the reconfiguration module 26 may next reconfigure the configuration settings of the configuration settings module 28.

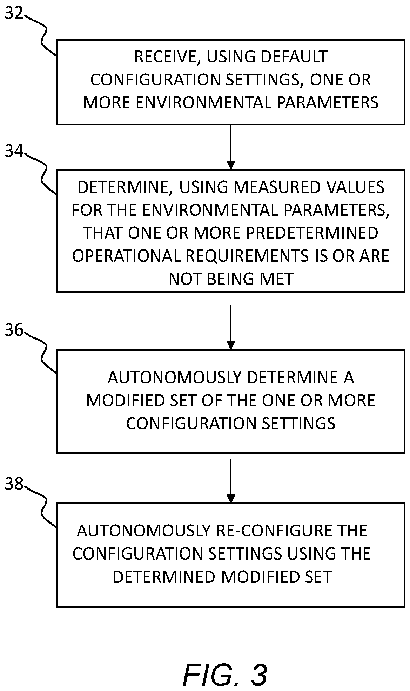

FIG. 3 is a flow diagram indicating processing operations that may be performed by the RF system 20, for example by the controller 12, in accordance with some example embodiments. The operations may be performed in hardware, software, firmware or a combination thereof.

A first operation 32 may comprise receiving, using default configuration settings, one or more environmental parameters.

A second operation 34 may comprise determining, using measured values for the environmental parameters, that one or more predetermined operational requirements are not being met.

A third operation 36 may comprise autonomously determining a modified set of the one or more configuration settings.

A fourth operation 38 may comprise autonomously re-configuring the configurations settings using the determined modified set.

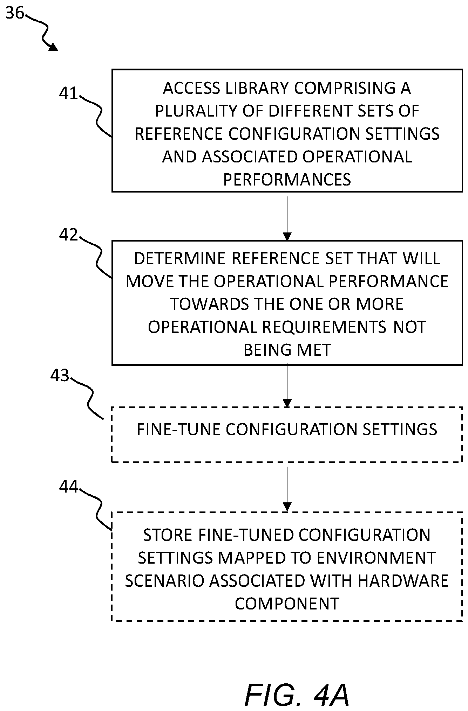

FIG. 4A is a flow diagram indicating processing operations that may be performed as part of the third operation 36, in accordance with some example embodiments. The operations may be performed in hardware, firmware or a combination thereof.

A first operation 41 may comprise accessing a library comprising a plurality of different sets of reference configuration settings and associated operational performances.

A second operation 42 may comprise determining a reference set that will move the operational performance towards the one or more operational requirements not being met.

A third, optional, operation 43 may comprise fine tuning the configuration settings, e.g. to optimize the configuration settings.

A fourth, also optional, operation 44 may comprise storing the fine-tuned configuration settings mapped to the environment scenario associated with the hardware component.

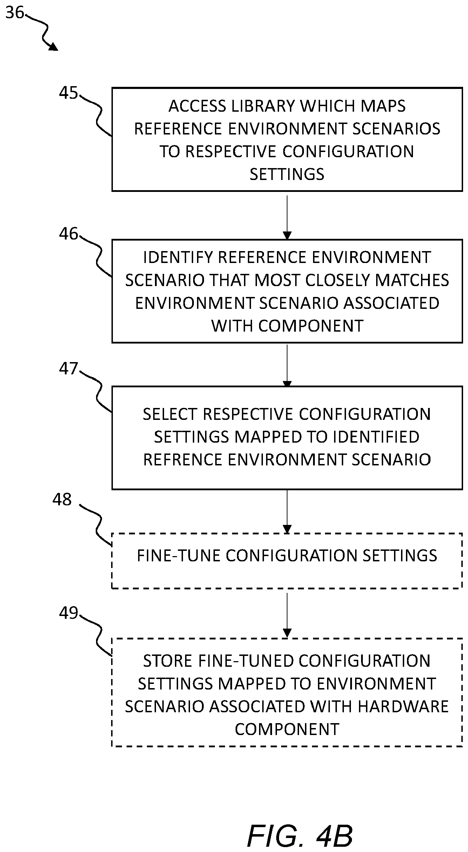

FIG. 4B is a flow diagram indicating processing operations that maybe performed as part of the third operation 36, in accordance with some example embodiments which may be alternative of additional to the operations described with reference to FIG. 4A. The operations may be performed in hardware, firmware or a combination thereof.

A first operation 45 may comprise accessing a library that maps reference environment scenarios, e.g. defined by the one or more environmental parameters collectively, to respective configurations settings.

A second operation 46 may comprise identifying the reference environment scenario that most closely matches the environment scenario associated with the hardware component.

A third operation 47 may comprise selecting the respective configuration settings mapped to the identified reference environment scenario.

A fourth, optional, operation 48 may comprise fine tuning the configuration settings, e.g. to optimize the configuration settings.

A fifth, also optional, operation 49 may comprise storing the fine-tuned configuration settings mapped to the environment scenario associated with the hardware component.

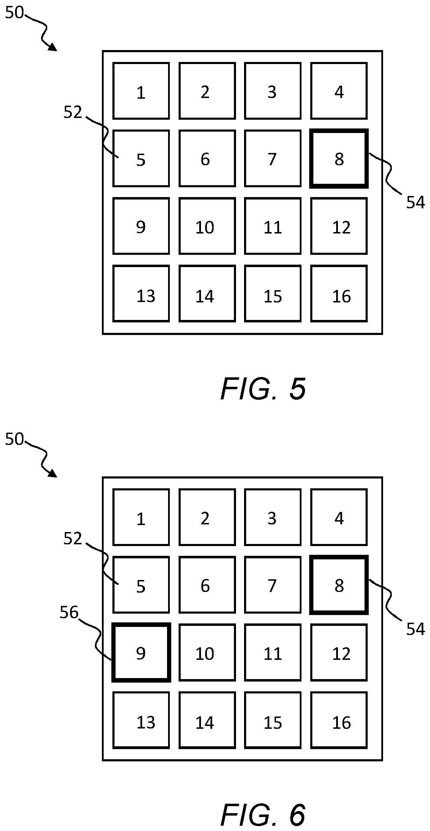

FIG. 5 shows an example embodiment of an RF surface 50 which may provide an antenna or other RF component, comprising an array of conductive antenna elements 52 for radiating or receiving RF energy. The array in this example comprises sixteen antenna elements 52 arranged orthogonally in a 4 x 4 grid, but any suitable configuration may be used. The RF surface 50 may be configured via a controller, such as that described with reference to FIGS. 1 and 2, to enable (e.g. switch-on) any number and any combination of antenna elements 52. The resulting transmitting and/or receiving beam can therefore be adaptively controlled using aforementioned systems and methods. For example, the controller 12 may be configured to enable and/or disable particular antenna elements 52 via a feeder structure using switches. Alternatively, or additionally, the controller may be configured to split or divide input power among the antenna elements 52, e.g. whereby a first antenna element receives 90% of the power and a second antenna element receives 10% of the power, in a two-element arrangement.

The RF surface 50 may comprise the antenna hardware component 14 shown in FIG 1. At the manufacturer / supplier end, operational (e.g. performance) requirements such as one or more of frequency, bandwidth, impedance, Voltage Standing Wave Ratio (VSWR), and size limitations may be defined and stored in data representation in the performance requirements module 24.

A default set of configuration settings may be configured on the device to achieve the performance requirements, which for example in the shown case may comprise switching on only antenna element 54 (having index #8) or using the feeder structure to provide 100% of the power to said antenna element, as shown in FIG. 5.

Table 1 shows in tabular form the default configuration settings, where only the antenna element 54 (index #8) is enabled. The power weight value indicates that 100% of the power is fed to antenna element 54.

Table 1: Default Power split for Adaptive Beamforming Antenna Array (Fig. 1).

| Antenna index # | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Power weight | 0 | 0 | 0 | 0 | 0 | 0 | 0 | 1 | 0 | 0 | 0 | 0 | 0 | 0 | 0 | 0 |

When used at a customer site, the default configuration settings may be used to perform basic characterization of the environment, for example to receive and determine environmental parameters such as one or more of channel state information (CSI), interference levels, interference sources, path loss using spectrum sensing techniques, as well as angle and direction of arrival (DoA). These environmental parameters may be determined using known methods, e.g. ESPRIT, for which refer to R. Roy and T. Kailath, "ESPRIT-estimation of signal parameters via rotational invariance techniques," in IEEE Transactions on Acoustics, Speech, and Signal Processing, vol. 37, no. 7, pp. 984-995, July 1989 or MUSIC, for which refer to R. Schmidt, "Multiple emitter location and signal parameter estimation," in IEEE Transactions on Antennas and Propagation, vol. 34, no. 3, pp. 276-280, March 1986.

Having characterized the environment, as well as the operational requirements which may be stored on-board the RF system 10, the next stage is for the reconfiguration module 26 to determine how to modify the configuration settings to meet the operational requirements. For example, the operational requirements may specify a certain value of directionality, bandwidth, beam width, input power and required gain to provide a certain system-level performance, e.g. user throughput. For example, the environment characterization may reveal that the default configuration settings are not sufficient from the point of view of directivity, bandwidth and beam width. Therefore, these parameters need to be modified.

The reconfiguration library 29 may store a finite number of commonly-used antenna patterns having corresponding configuration settings. The reconfiguration module 26 may determine the most suitable antenna pattern to modify the directivity, bandwidth and beam width to the required values, or at least towards the required values. For example, it may be determined that a better antenna pattern to use is one comprising first and second antenna elements 54, 56 (indexes #8 and #9) which provides improved directivity, bandwidth and beam width. Each of said first and second antenna elements 54, 56 may receive 50% of the input power, as indicated in Table 2 below.

Table 2: Modified Power split for Adaptive Beamforming Antenna Array

| Antenna index # | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Power weight | 0 | 0 | 0 | 0 | 0 | 0 | 0 | 0.5 | 0.5 | 0 | 0 | 0 | 0 | 0 | 0 | 0 |

The pattern represented in Table 2 can be arrived at by evaluating all available patterns in the library in terms of operational performance. For example, a cost function may be defined based on the differences between the required characteristics of, in this example, directivity, bandwidth and beam width and those exhibited by different patterns in the library. For example, if we determine a required pattern as $P_r$ then the goal is to find $P_p$ to minimize $| P_r - P_p |$, with $P_p$ being an evolved version of a pattern available in the library. For example, consider antenna gain. If only one antenna element 52 is switched on, the gain may be limited to, say, 6 dBi. If higher antenna gain is required, additional antenna elements will need to be switched on. It may be decided to switch on a first neighbouring antenna element 52 and monitor performance, such as gain but possibly also directivity. If switching both antenna elements 52 on with equal power distribution yields desired gain, but not directivity, we may need to provide additional phase shifting which will direct the desired beam to the desired direction.

Also, different patterns may result not only from the number and arrangement of antenna elements 52, but also the power split for different enabled antenna elements. For example, the cost function may be evaluated by applying different weights to the first and second antenna elements 54, 56 by varying the power division through parameter X1 (shown in Table 3 below) and monitoring the cost function.

Table 3: Evaluating Power Split

| Antenna index # | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Power weight | 0 | 0 | 0 | 0 | 0 | 0 | 0 | X1 | 1-X1 | 0 | 0 | 0 | 0 | 0 | 0 | 0 |

In accordance with operations 43, 48 shown in FIGS. 4A and 4B, the selected pattern may provide a basis for further refinement, or fine-tuning, as shown in Table 4. The idea is that optimal values of X1 and, in this case, an additional weight parameter Y0 maybe determined. X1 and Yo refer to the power delivered to the antenna, normalized to the maximum power delivered to the antenna. Hence, the values need to be less than 1. If 1 is the maximum power that can be delivered, and if the weight applied to one antenna element is X1 and the other is Y0, the remaining antenna element will receive 1 - X1 - Y0. A number of known optimization methods can be applied for this purpose, e.g. gradient-based methods, such as gradient descent, genetic algorithms, machine-learning methods, e.g. using reinforcement learning and so on. If, for example the directivity and bandwidth requirements are satisfied, but the beam width requirements are not satisfied, this fine-tuning may address the problem. As another example, if impedance matching is a not-met requirement, fine-tuning may address the problem by modifying the antenna feed type, its position and/or evaluating the need for additional impedance matching networks, assuming these can be re-configured via configuration settings.

Table 4: Fine Tuning

| Antenna index # | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Power weight | 0 | 0 | 0 | 0 | 0 | 0 | 0 | X1 | 1-X1-Y0 | Y0 | 0 | 0 | 0 | 0 | 0 | 0 |

For example, whereas the modified configuration settings indicated in Table 2 may provide improved performance over the default configuration settings, an optimised performance may be provided by the configuration settings indicated in Table 5, below.

Table 5: Configuration Settings after Fine Tuning

| Antenna index # | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Power weight | 0 | 0 | 0 | 0 | 0 | 0 | 0 | 0.42 | 0.46 | 0.12 | 0 | 0 | 0 | 0 | 0 | 0 |

Thus, by the reconfiguration module 26 modifying the configuration settings using the power split shown in Table 5, the resulting beam may meet all requirements. The fine-tuned configuration settings may additionally be stored in a network database and/or in the reconfiguration library 29 for future use when performing pattern selection. The above presented procedure for amplitude weight settings is readily applicable to phase setting of the array.

This self-design and self-calibration process ensures that certain operational requirements maybe met using a truly self-configuring RF system.

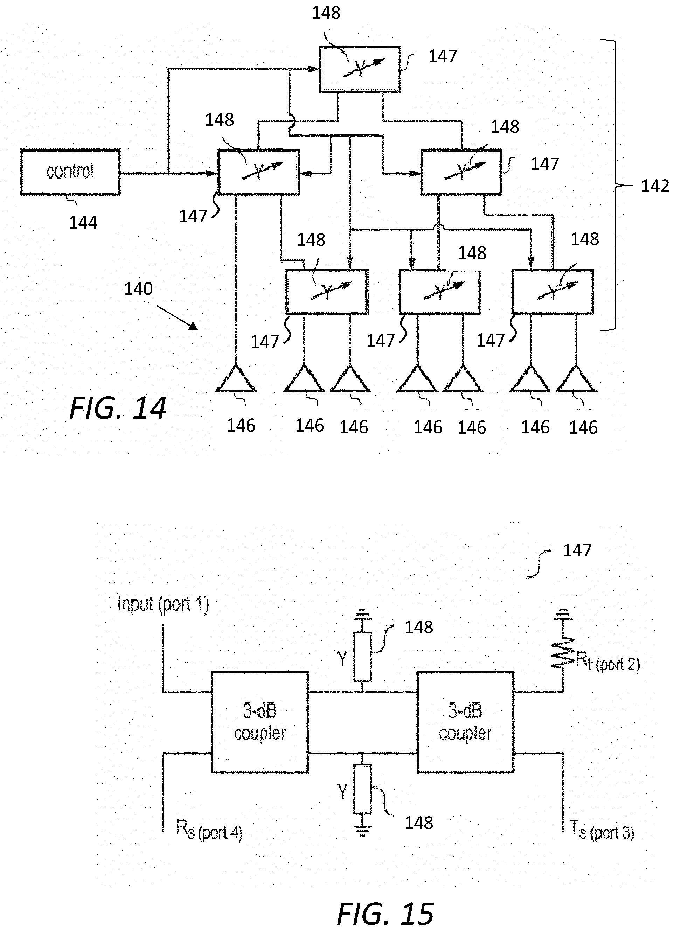

FIGS. 14 and 15 provide further information on how the FIG. 5 RF surface 50 may be comprised and weights determined.

Another embodiment to which the above-described techniques may be applied relates to a morphable RF component, i.e. one whose physical structure can be modified based on modified configuration settings, as opposed to the above example in which the configuration settings refer to how power is split among different antenna elements 52.

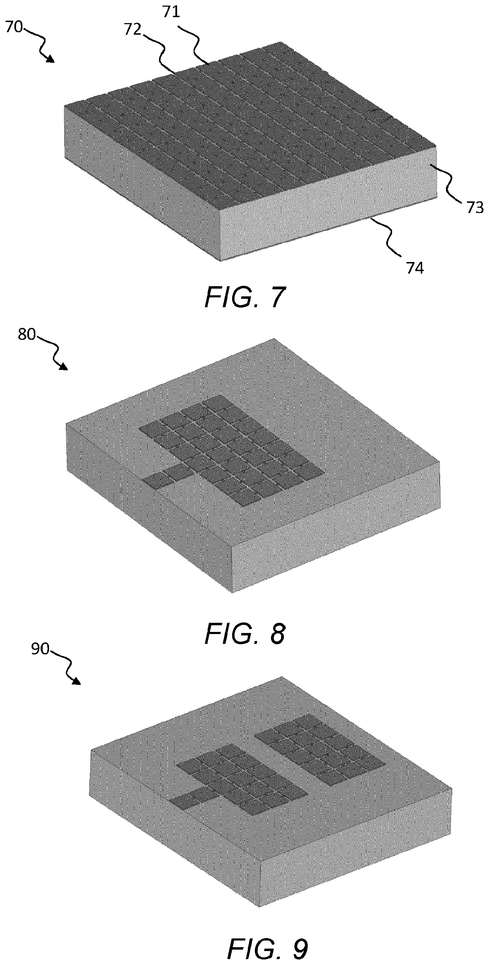

FIG. 7 shows such a morphable RF component 70, comprising a surface having a plurality of conductors 71 arranged in an orthogonal grid, each conductor being interlinked by switches 72 to adjacent conductors. The conductors 71 are provided on a substrate 73 located on a ground plane 74. The morphable RF component 70 may provide an RF antenna.

Further information on the morphable RF component's structure and operation is generally described, by way of example, with reference to FIGS. 14 - 16.

FIG. 8 shows one instantiation 80 of the morphable RF component 70 configured with default configuration settings, i.e. in terms of a default pattern of enabled conductors. The morphable component comprises a single patch. The same procedures as explained above for FIGS. 5 and 6 are followed, in terms of characterizing the environment from received signals to determine, for example, path loss, DoA and interference. For example, it may be determined that reconfiguration is necessary because one or more of these operational requirements is not being met.

At this point, and given the above information, the reconfiguration module 26 may determine that the FIG. 8 single patch antenna may not be the best solution and, instead, an array comprising two patches most appropriately satisfies the operational requirements. In this case, such an analysis may show that the instantiation 90 shown in FIG. 9 is a better solution. Then, the closest two patch pattern can be selected from the library for further analysis. For example, a cost function can simply evaluate the spacing between the two patches and their width for the best beam-width and directivity, for example as shown in FIG. 9. If the library did not reflect that a two patch antenna is better than the single patch antenna, the default configuration for the single patch antenna would be employed in a fine-tuning algorithm. This fine tuning, and storing of the resulting improved configuration settings over time will evolve incrementally to a solution that may meet all requirements thereby adaptively generating an optimal or near-optimal solution.

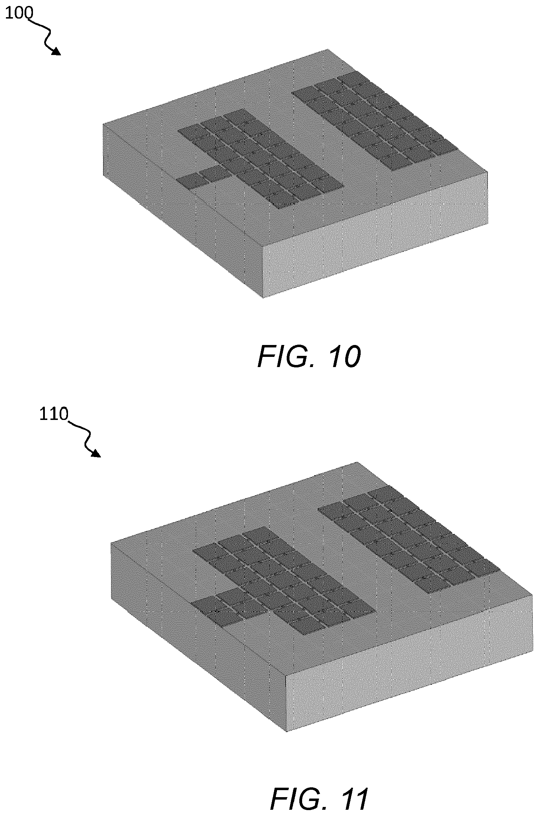

An evolution to a final component instantiation 110 via instantiation 100 is shown in FIGs. 10 and 11. One can clearly see that the controller 12, when used together with morphable hardware, enables a truly universal RF component that can be self-configured and customized in-situ to suit many RF environments.

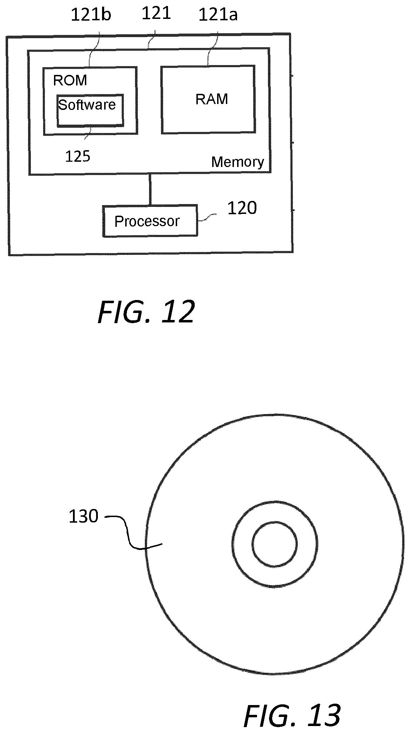

FIG. 12 shows an apparatus according to an embodiment, which may comprise the controller 12 as described herein. The apparatus may be configured to perform the operations described herein, for example operations described with reference to any preceding process. The apparatus comprises at least one processor 120 and at least one memory 121 directly or closely connected to the processor. The memory 121 includes at least one random access memory (RAM) 121a and at least one read-only memory (ROM) 121b. Computer program code (software) 125 is stored in the ROM 121b. The apparatus may be connected to a transmitter (TX) and a receiver (RX). The apparatus may, optionally, be connected with a user interface (UI) for instructing the apparatus and/or for outputting data. The at least one processor 120, with the at least one memory 121 and the computer program code 125 are arranged to cause the apparatus to at least perform at least the method according to any preceding process.

FIG. 13 shows a non-transitory media 130 according to some embodiments. The non-transitory media 110 is a computer readable storage medium. It may be e.g. a CD, a DVD, a USB stick, a blue ray disk, etc. The non-transitory media 130 stores computer program code, causing an apparatus to perform the method of any preceding process.

FIG. 14 schematically shows an antenna array 140 which may comprise the RF surface 50 shown and described with reference to FIGS. 5 and 6. Antenna element 146 may correspond to antenna element 52. Reference is also made to EP3128612, the contents of which are incorporated herein by reference.

The antenna array 140 includes a feeder network 142 and control logic 144 according to an embodiment. The antenna array 140 may comprise a plurality of antenna elements 146 supplied with signals from the feeder network 142 comprising signal dividers 147 arranged in a cascade arrangement. Each signal divider 147 has two outputs and one input. The outputs of the signal dividers 147 supply signals to respective antenna elements 146. Each signal divider 147 has a controllable variable impedance 148, whose impedance value is controlled by signals output by the control logic 144. The control logic 144 may be aware, e.g. programmed, with the architecture of the antenna array 140 and may receive signals indicative of the beam pattern that should be output by the antenna array. The control logic 144 may calculate weights, as mentioned previously, for each of the antenna elements 146 (denoted above by an index #) to provide the required beam pattern, and from this it may calculate the signals that should be supplied to each antenna element to generate that beam pattern and the corresponding impedance values required at the signal divider 147 to provide the appropriate signals to the individual antenna elements 146. The control logic 144 then generates and transmits control signals to control these impedances 148 and the signals supplied to the antenna elements 146 are appropriately weighted and the required beam pattern output.

One step in the design and control of the FIG. 14 architecture is to determine the complex weights associated with each antenna element 146 for a specific beam. The second step is to subsequently map these weights as admittance parameters for the specified architecture.

Consider an architecture with N = $2^{m+1}$ antenna elements 146. The amplitude and phase weights can be designed to produce a main lobe along direction θ while minimizing or at least reducing the energy radiated across all other directions, using:

$$u(\theta) = max \|a^T(\theta)u(\theta)\| subject\ to\ \min u^T(\theta)R_\alpha U(\theta)$$

where:

    u (θ) is amplitude and phase weights for a given beam;
    α (θ) is an array response for given angle; and
    Rα is the overall array response.

One approach to obtain the optimal solution for is through the Lagrange multiplier approach. Proceeding along the same lines, we can explicitly represent the admittance parameters of the feeder network as a function of u (θ) and solve for these parameters. Such an optimization ensures that the feeder network circuitry is optimized or at least improved to reduce loss and obtain desired beam pattern performance.

An elementary power divider 147 is shown in more detail in FIG. 15. A similar power divider has been disclosed by Bulja and Grebennikov in "A Novel Variable Power Divider with Continuous Power Division" in Microwave and Optical Technology Letters vol. 55 no. 7 pp1684 - 1686, July 2013. The use of such a power divider 147 is unique in the context of a feeder network 142 for an antenna array. The advantages of such a power divider 147 in an antenna feeder network 142 is that no or at least very low RF power is dissipated in the termination resistor, Rt, and that the input RF power at port 1 can be varied depending on the value of admittance Y, and can be either fully reflected towards port 4 or fully transmitted to port 3.

The principle of operation of the power splitter of FIG. 15 is such that a signal from port 1 gets split into two quadrature components, which are, depending on the value of admittance Y, either fully or partially reflected/transmitted at intermediate ports towards ports 3 and 4, respectively. In other words continuous power division is obtained and RF power is not wasted during the division operation. Of course, some RF power is lost in the parasitics of the circuit, but no RF power is intentionally burnt in order to perform this operation. Port 2 and port 1, by virtue of a 3-dB coupler remain isolated regardless of the value of admittance Y.

By utilizing the circuit of FIG. 15 as a constitutive, unit power divider cell of the antenna feeder network 142, it is possible to obtain almost any power division of the input RF signal. In particular, this means that the input RF signal can be split in almost any power division ratio. The limit case lies with switching some antenna elements 146 fully off.

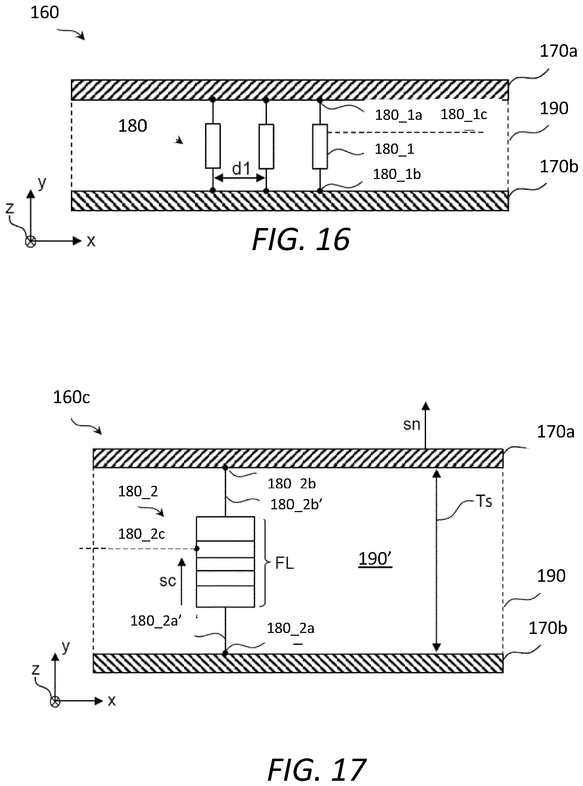

With reference to FIGS. 16 - 18, example embodiments will be described which are usable for at least part of the morphable RF component (antenna) 70, 80, 90, 100, 110 described above with reference to FIGS. 7 - 11. For ease of reference, only reference numeral 70 will be used in the following. Reference is also made to EP3618117, the contents of which are incorporated herein by reference.

FIG 16 schematically depicts a cross-sectional side view of an apparatus 160 that may comprise at least a part said morphable RF component 70. The apparatus 160 may comprise a first layer 170a of electrically conductive material, a second layer 170b of electrically conductive material, and a plurality of impedance elements 180 arranged between said first layer 170a and said second layer 170b. The impedance elements 180 connect said first layer 170a with said second layer 170b, wherein an impedance value of at least some of said plurality of impedance elements 180 is controllable. By controlling the impedance value of individual ones, or at least some of said plurality of impedance elements 180, a resulting coupling between the first and second layers 170a, 170b may be influenced, wherein this coupling *inter alia* depends on the spatial distribution of the impedance elements 180 and the impedance values obtained by said control. This enables to control electromagnetic conditions (electric field and/or magnetic field and/or current density), particularly local electromagnetic conditions in the region of the specific impedance element 180.

For example, one impedance element is denoted with reference numeral 180_1. Said impedance element 180_1 comprises a first terminal 180_1a which is connected in an electrically conductive manner to the first layer 170a, and a second terminal 180_1b which is connected in an electrically conductive manner to the second layer 170b. An optional control line or terminal 180_1c is also depicted which may be used to control the impedance value of the impedance element 180_1. According to further embodiments, said first layer 170a and/or said second layer 170b may be a contiguous layer, e.g. comprising a contiguous area of electrically conductive material in a plane defined by said layer 170a, 170b (said plane extending along the x axis and the z axis, which is perpendicular to the drawing plane of FIG. 16).

According to further embodiments, a substrate layer 190 is provided between said first layer 170a and said second layer 170b, which enables efficient manufacturing and obtaining a defined geometry such as e.g. a distance (along the y-axis) between said first and second electrically conductive layers 170a, 170b. Preferably, said substrate layer 190 comprises dielectric (electrically non-conductive) material.

According to further embodiments, said plurality of impedance elements 180 are arranged within said substrate layer 190, e.g. embedded within the substrate material, which enables a high degree of integration. According to further embodiments, at least one impedance element of said plurality of impedance elements 180 comprises at least one of: a switch, in particular an electrochromic (EC) switch, and/or a variable capacitor. According to further embodiments, at least one impedance element of said plurality of impedance elements 180 may also comprise a combination of two or more of the aforementioned elements (e.g. a switch, in particular an electrochromic switch, and a variable capacitor). According to further embodiments, if an impedance element 180 comprises a switch, different impedance values such as a low resistance (i.e., comparatively low value of the real part of the impedance) or a high resistance (i.e., comparatively high value of the real part of the impedance) may be obtained by controlling the switch. In other words, in a switched-on state of the switch, a particularly low resistance may be obtained, thus connecting the first and second electrically conductive layers in the region of the specific impedance element via said low resistance, which e.g. affects the distribution of currents and/or the current density of the first and second conductive layers. By contrast, in a switched-off state of the switch, a usually comparatively high resistance is given so that substantially no strong effect is obtained with respect the distribution of currents and/or the current density of the first and second conductive layers in the region of the specific impedance element. According to further embodiments, switches may also provide for one or more intermediate switching states, in addition to the switched-on and the switched-off state, whereby a respective resistance may be provided to connect the first and second conductive layers in the region of the specific impedance element. As an example, if a switch is designed as a MOSFET, the resistance of its drain-source path may be controlled by applying a respective voltage to the gate-source path of the MOSFET.

According to further embodiments, cf. the apparatus 160c depicted by FIG. 17, at least one impedance element 180_2 (e.g., a switch such as a MOSFET or an EC-type switch) of said plurality of impedance elements comprises a stacked layer configuration having a plurality of functional layers FL, wherein said functional layers FL are stacked over each other along a stack coordinate sc, which stack coordinate sc is substantially parallel to a surface normal sn of a surface of the first layer 170a and/or said second layer 170b. This enables a high level of integration. According to further embodiments, however, the stack coordinate may be substantially perpendicular to a surface normal sn of a surface of the first layer and/or said second layer, or aligned with any other direction different from the abovementioned variants.

As can be seen from FIG. 17, the functional layers FL of the switch 180_2 are connected with terminals 180_2a, 180_2b to the respective layer 170a, 170b. Optionally, vias 180_2a', 180_2b' embedded within the substrate layer material 190' may be provided between the functional layers FL and the respective layer 170a, 170b. A control line may also be embedded in the substrate layer material 190' and enables to provide a control signal from a control unit to the impedance element 180_2 to control its impedance or switching state.

According to further embodiments, a layer thickness TS of the optional substrate layer 190 may e.g. range between 10 $\mu$m (micrometer) to several millimeter (mm) (for example similar to PCB substrates), preferably between about 100 $\mu$m to several mm.

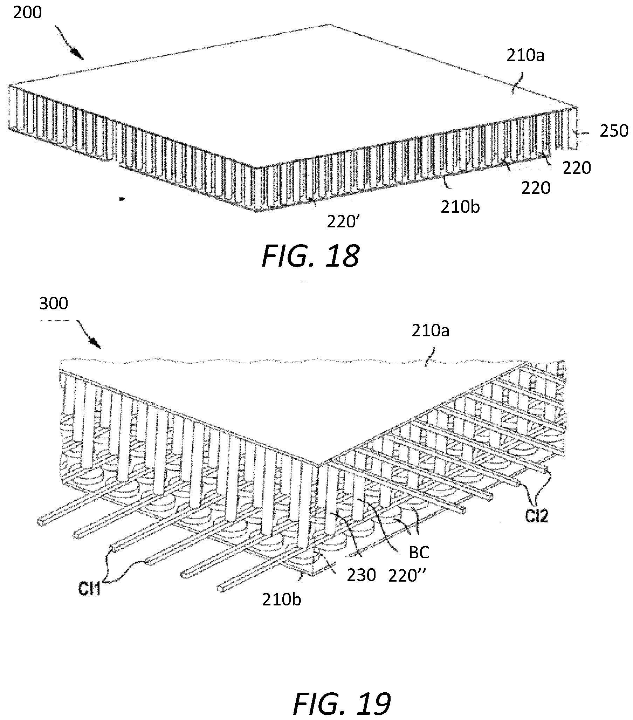

FIG. 18 schematically depicts a perspective view of an apparatus 200 that may also provide at least part of the aforementioned morphable RF component 70. Apparatus 200 comprises a plurality of impedance elements 220 implemented in the form of switches, which are embedded in a substrate layer 250 arranged between the electrically conductive layers 210a, 210b. As can be seen from FIG. 18, the switches extend vertically through the substrate layer 250, i.e. parallel to a surface normal of the conductive layers 210a, 210b. Advantageously, by opening or closing the switches 220, the local EM conditions may be strongly affected. As an example, when a specific switch 220' is left open, a local value of current in the region of said specific switch 220' (also including portions of the layers 210a, 210b) decreases (and associated M (magnetic)-field), but a local value of voltage increases (and associated E (electric)-field). The situation is reversed when the switch 220' is closed. Since a functionality of device processing signals, e.g. RF signals, is dependent upon manipulation of magnetic and electric fields, the actuation of the switches 220 of the apparatus 200 changes the function of the apparatus with respect to such signals.

The apparatus 200 can accommodate any standard RF device such as filter, antenna, phase shifter, directional coupler, just to name a few. Furthermore, several of the differing in function devices can be programmed by configuring the apparatus 200, together with the network of their interconnects, such as transmission lines or waveguides. The configuration of the apparatus 200 can also be reprogrammed on-demand ("reconfiguration") using a control unit, e.g. by providing control signals for individual impedance elements or groups of impedance elements.

FIG. 19 schematically depicts a perspective view of an apparatus 300 according to a further embodiment, which, in contrast to the configuration 200 of FIG. 18, comprises additional direct current (DC) blocking capacitors BC connected in series with individual switches 220 preventing an exchange of direct current signal components between parts of an impedance element (switch) and/or the first and/or second electrically conductive layer 210a, 210b. Note that DC blocking capacitors maybe provided at both (upper and lower) ends of the switches 220, although, for reasons of clarity, only the lower DC blocking capacitors BC are depicted in FIG. 19. To summarize, for an individual switch 220" of the apparatus 300, a series connection as follows is provided: a portion of the first layer 210a in the region of said switch 220", a first DC blocking capacitor BC, the switch 220", a second DC blocking capacitor BC, and a portion of the second layer 210b in the region of said switch 220". FIG. 19 also depicts a plurality of control lines or inputs CIi, CI2, that may be embedded in a substrate material of the substrate layer (not shown). According to preferred embodiments, the control inputs CIi, CI2 enable to supply each individual switch 220" (and/or groups of switches) with a respective control signal cs, that may e.g. be provided by the optional control unit.

Operating voltages for the switches 220" may be highly dependent on a technology used. For example, for switches based on PIN diodes, switch ON voltages are up to 1V, but the switch ON dc current may exceed a few mA (milli ampere).

According to further embodiments, for switches based on MOSFET (CMOS in particular) the switch ON voltages may go up to 5 V. The switch OFF voltage in both cases is may be 0 V. According to further embodiments, for EC-based switches, switch ON voltages can go up to 10 V, while the switch OFF voltages may be negative (around 10 V, too). According to further embodiments, if variable impedance is used, i.e. variable capacitances using semiconductor technology, dc bias voltages can range up to 10s V, where the exact value may be determined by a breakdown voltage of the particular semiconductor technology used. According to further embodiments, for EC-based variable capacitances, the dc bias voltages are up to 10 V, whereas ferro-electric variable impedance elements may use high dc voltages, which can go up to 100s V, depending on the thickness of active ferro-electric films (thick films require higher dc bias voltages).

In other words, according to further embodiments, the switches 220" of apparatus 300, once actuated (i.e., activated) connect a particular point or region on the top layer 210a to the bottom layer 210b, which may be a ground plane, resulting in a disturbance of the electric current in the respective regions of the layers 210a, 210b. This, in turn, results in the redistribution of the electric current on the first layer 210a so as to accommodate the newly-introduced short to the ground plane 210b. If the apparatus or device 300 were to operate as an antenna, placing an arbitrary short at any point of its surface 210a may result in changes of its impedance and radiation characteristics. The switches 220" of the apparatus 300 are arranged in a two-dimensional regular raster, corresponding to a matrix arrangement, comprising n rows and m columns, so that (n*m) switches 220" are provided. Preferably, all n*m many switches 220" may be individually controlled by means of a control unit, particularly individually switched on or off, independent of the state of other switches. In other words, this configuration represents a type of "canvas" or "smart surface" on which a wide variety of RF devices can be made, e.g. by configuring the individual switches 220". According to further embodiments, instead of switches, particularly EC switches or MOSFETs, other impedance elements with a controllable impedance may also be used.

According to further embodiments, the switches 220" may be considered to form an n x m matrix, enabling the "drawing" of various RF circuits. In this way, each switch 220" can be thought of as a "bit" or "pixel" on the RF canvas or smart surface, provided in form of said apparatus 300. By properly actuating the "bits" or the "pixels" (i.e., the switches 220" or generally impedance elements) various RF components can be created, such as antennas, antenna array, filters and waveguides.

According to further embodiments, the granularity or accuracy of the devices that can be created in this way depends on a "density" of the switches and/or on their spatial distribution between the layers 210a, 210b.

As described herein, a memory may be volatile or non-volatile. It may be e.g. a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

**Claims**

1. An apparatus, comprising means for:

    receiving, by a radiofrequency system configured with a default set of one or more configuration settings associated with a hardware component of said system, one or more environmental parameters;
    determining, using measured values for the received one or more environmental parameters, that one or more predetermined operational requirements associated with the hardware component of the radiofrequency system is not or are not being met;
    responsive to said determination:

        determining a modified set of the one or more configuration settings; and
        reconfiguring the default set of one or more configuration settings using the determined modified set.

2. The apparatus of claim 1, wherein the one or more predetermined operational requirements is or are pre-loaded on the radiofrequency system.

3. The apparatus of claim 1 or claim 2, wherein the one or more predetermined requirements represent radiofrequency performance requirements.

4. The apparatus of claim 3, wherein the one or more predetermined radiofrequency performance requirements define an overall target of the radiofrequency system.

5. The apparatus of claim 4, wherein the overall target of the radiofrequency system defines a minimum data throughput.

6. The apparatus of any of claims 3 to 5, wherein the one or more predetermined performance requirements include a minimum value, a maximum value or range of acceptable values for particular received environmental parameters, comprising one or more of impedance, Voltage Standing Wave Ratio (VSWR), directionality, e.g. direction and/or angle of arrival, path loss, bandwidth, beam width, centre frequency, input power, signal gain, channel state information (CSI), interference levels and interference sources.

7. The apparatus of any preceding claim, wherein the one or more environmental parameters comprise one or more of impedance, Voltage Standing Wave Ratio (VSWR), directionality, e.g. direction and/or angle of arrival, path loss, bandwidth, beam width, centre frequency, input power, signal gain, channel state information (CSI), interference levels and interference sources.

8. The apparatus of any preceding claim, wherein the means for determining the modified set of one or more configuration settings is configured to:

    access a library comprising a plurality of different sets of reference configuration settings and associated operational performances; and
    determine a reference set of configuration settings that will move the operational performance at least towards the one or more predetermined operational requirements that is or are not being met.

9. The apparatus of claim 8, wherein the library comprising the plurality of sets of reference configurations settings is pre-loaded on the radiofrequency system.

10. The apparatus of any of claims 1 to 7, wherein the one or more environmental parameters collectively define an environment scenario associated with the hardware component, and wherein the means for determining the modified set of one or more configuration settings is configured to:

    access a library comprising a plurality of sets of reference environment scenarios mapped to respective configuration settings for modifying the operational performance of the hardware component in a particular way; and
    determine the reference set of the environment scenarios that most closely matches the environment scenario associated with the hardware component and modifies the operational performance at least towards the one or more predetermined operational requirements that is or are not being met.

11. The apparatus of any of claims 8 to 10, further comprising means for fine-tuning one or more of the determined configuration settings to meet or exceed the one or more predetermined operational requirements.

12. The apparatus of any preceding claim, wherein the default configuration settings are associated with the physical structure of the hardware component and wherein reconfiguring the default set of one or more configuration settings comprises modifying the physical structure of the hardware component.

13. The apparatus of any preceding claim, wherein the hardware component is an antenna, optionally wherein the antenna comprises a surface having a plurality of radiating elements, wherein the default configuration settings define a first pattern of enabled radiating elements and the modified configuration settings define a second, different, pattern of enabled radiating elements.

14. The apparatus of any preceding claim, wherein the determining the modified set of the one or more configuration settings and the reconfiguring the default set of the one or more configuration settings using the determined modified is performed autonomously by the apparatus.

15. A method, comprising:

receiving, by a radiofrequency system configured with a default set of one or more configuration settings associated with a hardware component of said system, one or more environmental parameters;
determining, using measured values for the received one or more environmental parameters, that one or more predetermined operational requirements associated with the hardware component of the radiofrequency system is not or are not being met;
responsive to said determination:

determining a modified set of the one or more configuration settings; and
reconfiguring the default set of one or more configuration settings using the determined modified set.

10

CONTROLLER    12

14

*FIG. 1*

to 14

12

CONFIG. SETTINGS **28**

OPERATIONAL REQUIREMENTS **24**

RECONFIGURATION MODULE **26**

ENVIRONMENT MONITORING MODULE **22**

RECONFIGURATION LIBRARY **29**

*FIG. 2*

32 — RECEIVE, USING DEFAULT CONFIGURATION SETTINGS, ONE OR MORE ENVIRONMENTAL PARAMETERS

34 — DETERMINE, USING MEASURED VALUES FOR THE ENVIRONMENTAL PARAMETERS, THAT ONE OR MORE PREDETERMINED OPERATIONAL REQUIREMENTS IS OR ARE NOT BEING MET

36 — AUTONOMOUSLY DETERMINE A MODIFIED SET OF THE ONE OR MORE CONFIGURATION SETTINGS

38 — AUTONOMOUSLY RE-CONFIGURE THE CONFIGURATION SETTINGS USING THE DETERMINED MODIFIED SET

*FIG. 3*

36

41 — ACCESS LIBRARY COMPRISING A PLURALITY OF DIFFERENT SETS OF REFERENCE CONFIGURATION SETTINGS AND ASSOCIATED OPERATIONAL PERFORMANCES

42 — DETERMINE REFERENCE SET THAT WILL MOVE THE OPERATIONAL PERFORMANCE TOWARDS THE ONE OR MORE OPERATIONAL REQUIREMENTS NOT BEING MET

43 — FINE-TUNE CONFIGURATION SETTINGS

44 — STORE FINE-TUNED CONFIGURATION SETTINGS MAPPED TO ENVIRONMENT SCENARIO ASSOCIATED WITH HARDWARE COMPONENT

*FIG. 4A*

36

45 — ACCESS LIBRARY WHICH MAPS
REFERENCE ENVIRONMENT SCENARIOS
TO RESPECTIVE CONFIGURATION
SETTINGS

46 — IDENTIFY REFERENCE ENVIRONMENT
SCENARIO THAT MOST CLOSELY MATCHES
ENVIRONMENT SCENARIO ASSOCIATED
WITH COMPONENT

47 — SELECT RESPECTIVE CONFIGURATION
SETTINGS MAPPED TO IDENTIFIED
REFRENCE ENVIRONMENT SCENARIO

48 — FINE-TUNE CONFIGURATION SETTINGS

49 — STORE FINE-TUNED CONFIGURATION
SETTINGS MAPPED TO ENVIRONMENT
SCENARIO ASSOCIATED WITH HARDWARE
COMPONENT

FIG. 4B

**FIG. 5**

**FIG. 6**

FIG. 7

FIG. 8

FIG. 9

100

*FIG. 10*

110

*FIG. 11*

121b     121     121a

ROM

Software

RAM

125

Memory

Processor    120

## FIG. 12

130

## FIG. 13

*FIG. 14*

*FIG. 15*

160

170a

190

180

180_1a    180_1c

180_1

d1

180_1b

170b

y

z

x

*FIG. 16*

160c

sn

170a

180_2

180_2b
180_2b'

Ts

180_2c

FL

190'

sc

190

180_2a'

180_2a

170b

y

z

x

*FIG. 17*

FIG. 18

FIG. 19

**EUROPEAN SEARCH REPORT**

Europäisches Patentamt
European Patent Office
Office européen des brevets

Application Number

EP 21 17 5331

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/033779 A1 (DELPHI TECH INC [US]; MONARCH ANTENNA INC [US] ET AL.) 25 March 2010 (2010-03-25) * paragraphs [0001], [0010] * * paragraphs [0078], [0079] * * paragraphs [0083], [0084] * * claims 1-4 * * figures 1-14 * | 1-15 | INV. H04B1/28 H01Q3/01 H04B1/403 H04W88/06 |
| X | WO 99/09721 A1 (MOTOROLA INC [US]) 25 February 1999 (1999-02-25) * page 5, line 21 - page 6, line 8 * * page 14, line 15 - line 24 * * figures 1, 2 * * claim 1 * | 1,15 | |
| X | WO 2013/120536 A1 (SONY ERICSSON MOBILE COMM AB [SE]; ZANDER OLOF [SE] ET AL.) 22 August 2013 (2013-08-22) * page 6, line 4 - line 11 * * page 8, line 11 - page 9, line 9 * * figures 1-3 * | 1,15 | TECHNICAL FIELDS SEARCHED (IPC) |
| A | US 2015/049642 A1 (ENG TOMMY K [US] ET AL) 19 February 2015 (2015-02-19) * claims 1-5 * | 1-15 | H04B H01Q H04W |

The present search report has been drawn up for all claims

| Place of search | Date of completion of the search | Examiner |
|---|---|---|
| Munich | 15 October 2021 | Avilés Martínez, L |

EPO FORM 1503 03.82 (P04C01)

**ANNEX TO THE EUROPEAN SEARCH REPORT
ON EUROPEAN PATENT APPLICATION NO.** EP 21 17 5331

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2021

| Patent document cited in search report | | Publication date | Patent family member(s) | | Publication date |
|---|---|---|---|---|---|
| WO 2010033779 | A1 | 25-03-2010 | US | 2011175791 A1 | 21-07-2011 |
| | | | WO | 2010033779 A1 | 25-03-2010 |
| WO 9909721 | A1 | 25-02-1999 | CN | 1241332 A | 12-01-2000 |
| | | | GB | 2335119 A | 08-09-1999 |
| | | | WO | 9909721 A1 | 25-02-1999 |
| WO 2013120536 | A1 | 22-08-2013 | US | 2013231066 A1 | 05-09-2013 |
| | | | WO | 2013120536 A1 | 22-08-2013 |
| US 2015049642 | A1 | 19-02-2015 | CN | 105594276 A | 18-05-2016 |
| | | | CN | 110139381 A | 16-08-2019 |
| | | | EP | 3036955 A1 | 29-06-2016 |
| | | | JP | 6603219 B2 | 06-11-2019 |
| | | | JP | 2016529831 A | 23-09-2016 |
| | | | JP | 2020025294 A | 13-02-2020 |
| | | | KR | 20160045120 A | 26-04-2016 |
| | | | KR | 20180019759 A | 26-02-2018 |
| | | | KR | 20200047763 A | 07-05-2020 |
| | | | KR | 20210048584 A | 03-05-2021 |
| | | | US | 2015049642 A1 | 19-02-2015 |
| | | | US | 2017325105 A1 | 09-11-2017 |
| | | | US | 2018146383 A1 | 24-05-2018 |
| | | | US | 2018160322 A1 | 07-06-2018 |
| | | | US | 2019174333 A1 | 06-06-2019 |
| | | | US | 2020229004 A1 | 16-07-2020 |
| | | | WO | 2015026821 A1 | 26-02-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3128612 A

- EP 3618117 A

**Non-patent literature cited in the description**

- **R. ROY ; T. KAILATH.** ESPRIT-estimation of signal parameters via rotational invariance techniques. *IEEE Transactions on Acoustics, Speech, and Signal Processing,* July 1989, vol. 37 (7), 984-995
- **R. SCHMIDT.** Multiple emitter location and signal parameter estimation. *IEEE Transactions on Antennas and Propagation,* March 1986, vol. 34 (3), 276-280

- **BULJA ; GREBENNIKOV.** A Novel Variable Power Divider with Continuous Power Division. *Microwave and Optical Technology Letters,* July 2013, vol. 55 (7), 1684-1686